# EUROPEAN PATENT APPLICATION

(11) **EP 3 471 051 A1**
(43) Date of publication of application: **17.04.2019**
(21) Application number: 17382687.6
(22) Date of filing: 16.10.2017
(51) Int. Cl.: G06Q 50/30, G06Q 10/02, G06Q 10/04, G07B 15/02

(54) **AN AUTOMATIC ON-DEMAND MULTI-PASSENGER RIDE SHARING COMPUTER-IMPLEMENTED METHOD, COMPUTER PROGRAM AND SYSTEM**

(71) Applicant: Shotl Transportation, S.L., 08174 Sant Cugat del Vallés (ES)
(72) Inventor: AGRAMUNT PUIG, Sebastià, 08008 BARCELONA (ES); LAGUNAS FERNÁNDEZ, Aitor, 08225 TERRASSA (ES)
(74) Representative: Ponti & Partners, S.L.P

(57) **Abstract**

The present invention relates to an automatic on-demand multi-passenger ride sharing computer-implemented method, comprising:
a) a user requesting a ride in a multi-passenger motor vehicle; and
b) selecting and modifying an already existing multi-passenger motor vehicle route upon said user ride request, and assigning the modified route to the associated multi-passenger motor vehicle.

Step b) comprises:
b1) defining data sets representative of several divergent geographical areas; and
b2) checking if pickup and drop-off locations for the ride requested at step a) are within two respective of the several divergent geographical areas, and if so selecting the associated already existing route as a candidate route to be modified and assigned to the associated multi-passenger motor vehicle.

The invention also relates to a computer program and to a system, both adapted to implement the method of the invention.

## Description

### FIELD OF THE INVENTION

The present invention generally relates, in a first aspect, to an automatic on-demand multi-passenger ride sharing computer-implemented method, and more particularly to a method comprising an improved selection, modification and assigning of an already existing route for including therein a new user requesting a ride.

Second and third aspects of the invention relate to a computer program and to a system, respectively, both adapted to implement the method of the first aspect of the invention.

### BACKGROUND OF THE INVENTION

Some automatic on-demand multi-passenger ride sharing computer-implemented methods which comprises the steps included in the preamble of claim 1 are known in the art, i.e. which include the following steps:
a) a user requesting to a computing server, by means of a corresponding user computing device in communication therewith, a ride in a multi-passenger motor vehicle from an origin location up to a destiny location; and
b) selecting and modifying, by means of data processing at said computing server, an already existing multi-passenger motor vehicle route, out of several already existing routes of several multi-passenger motor vehicles for other users, upon said user ride request, assigning the modified route to the associated multi-passenger motor vehicle, and sending the assigned modified route to a driver computer device accessed by the driver of the associated multi-passenger route.

One of said methods is disclosed in EP0859346A1, where different devices implement the above mentioned steps, for continuously updating already scheduled routes of a set of multi-passenger motor vehicles, based, among others, on new requests for rides to pick-up further users.

The method proposed by said patent application is clearly improvable, specifically regarding the route updating process and hence the efficiency of the associated management of the multi-passenger motor vehicle fleet.

It is, therefore, necessary to provide an alternative to the state of the art which covers the gaps found therein, by providing a method and a system which provide such an improvement in the route updating process and associated management of a multi-passenger motor vehicle fleet, in order to obtain, among others, a reduction in the vehicles' motor consumption, a reduction in air pollution, and an increasing in traffic fluency.

### SUMMARY OF THE INVENTION

To that end, the present invention relates, in a first aspect, to an automatic on-demand multi-passenger ride sharing computer-implemented method, comprising, in a known manner:
a) a user requesting to a computing server, by means of a corresponding user computing device (generally, a handheld computer device, such as a smartphone or a tablet) in communication (wired and/or wirelessly) therewith, a ride in a multi-passenger motor vehicle from an origin location up to a destiny location; and
b) selecting and modifying (i.e., updating), by means of data processing at said computing server, an already existing multi-passenger motor vehicle route, out of several already existing routes of several multi-passenger motor vehicles for other users, upon said user ride request, assigning the modified route to the associated multi-passenger motor vehicle, and sending (wired and/or wirelessly) the assigned modified route to a driver computer device accessed by the driver of the associated multi-passenger route.

In contrast to the methods known in the prior art, in the one of the first aspect of the present invention comprises, in a characterizing manner, step b) comprises:
b1) defining, at the computing server and for at least some of different pickup and drop-off locations included in at least one of said several already existing routes, data sets representative of several divergent geographical areas, each departing from a respective of said different pickup and drop-off locations and diverging therefrom with a predetermined angle; and
b2) checking, by means of data processing at the computing server, if pickup and drop-off locations preassigned for the ride requested at step a) are within two respective of said several divergent geographical areas of at least one already existing route, and:
   b2a) if so, selecting the associated already existing route as a candidate route to be modified to include the pickup and drop-off locations of the requested ride, and to be assigned to the associated multi-passenger motor vehicle; or
   b2b) if said checking provides a negative result, performing the same checking step but on one or more other of said already existing routes, at least until a positive result is found for one of said already existing routes, and then selecting the already existing route providing said positive result as a candidate route to be modified to include the pickup and drop-off locations of the requested ride, and to be assigned to the associated multi-passenger motor vehicle.

For an embodiment, the method of the first aspect of the invention comprises, at step b2a) or b2b), modifying said candidate route to include the pickup and drop-off locations of the requested ride, and assigning the so modified route to the associated multi-passenger motor vehicle.

However, for a preferred embodiment of the method of the first aspect of the invention, said step b2a) and/or said step b2b) further comprises performing the same checking step but on one or more other of said already existing routes, and then selecting the already existing route or routes providing a positive result for said checking step as a candidate route or candidate routes to be modified to include the pickup and drop-off locations of the requested ride, and to be assigned to the associated multi-passenger motor vehicle.

The method of the first aspect of the invention further comprises, for an implementation of said preferred embodiment, processing, at the computing server, data representative of the candidates routes obtained at b2a) and/or b2b) to select one of them, based on an optimization process (such as by using a heuristic algorithm), modifying the so selected candidate route to include the pickup and drop-off locations of the requested ride, and assigning the so modified route to the associated multi-passenger motor vehicle.

The modified route is the one sent to the driver computer device.

By means of the method of the first aspect of the present invention, the most appropriate route, and associated multi-passenger motor vehicle, for each new ride request is always selected and modified/updated, so, as stated above, a more efficient and optimized management of a multi-passenger motor vehicle fleet is achieved, which results, among others, in a reduction in the vehicles' motor consumption, a reduction in air pollution (even for electric motor vehicles, as fuel is usually used in intermediate processes to generate electricity to charge the vehicles' electric batteries), and an increasing in traffic fluency.

Preferably, the steps of the method of the first aspect of the invention are repeated for a plurality of users, during the travelling of each multi-passenger motor vehicle through the respective assigned routes, being then those assigned routes continuously updated, for the appropriate vehicle(s), when new ride requests are received at the computing server.

For an embodiment, the method of the first aspect of the present invention comprises, at step b1), selecting each of said predetermined angles under the constraint that the divergent geographical area associated thereto only covers locations which are in paths not going in opposite directions to that departing from the corresponding pickup or drop-off location from which the divergent geographical area diverges and going up to the next drop-off or pickup location. With this embodiment, it is achieved that none of the multi-passenger motor vehicles travelling following a route goes back, i.e. in a reverse direction, with respect to the forward direction of said route (for each segment between pickup and drop-off locations of the route), to pick up a new user, i.e. that modifications of the already existing route which could cause such a reverse travelling are not allowed.

For an embodiment, each of said predetermined angles is below 90°, and preferably below 70°.

According to an embodiment, each of said predetermined angles is above 40°, and preferably above 50°.

For an embodiment, each of said several divergent geographical areas is symmetrically distributed with respect to a symmetry axis defined by a straight path departing from the corresponding pickup or drop-off location from which the divergent geographical area diverges and going up to the next drop-off or pickup location.

For a preferred embodiment, the checking process of step b) (including b2a and b2b) is performed based only on angle values, i.e. by comparing the value of the angle at which the respective preassigned pickup or drop-off location is placed, with respect to said straight path, with that of the corresponding divergent geographical area, and if the result of that comparison shows that the value of the angle of the preassigned pickup or drop-off location is not above that of the divergent geographical area, it is determined that the checking process has given a positive result. For this preferred embodiment, only the angular values of the divergent geographical areas are needed; so, for an implementation of this embodiment, those data sets representative of the several divergent geographical areas are defined at step b1) only by angular values.

According to an embodiment, the predetermined angles are variable for each new user ride request, and adjusted to a value considered appropriate for the new user ride request, based on several parameters, such as the characteristics of the areas through which the multi-passenger motor vehicles are travelling or to travel (such as traffic fluency, including traffic cuts and traffic jams, street directions, etc.), weather conditions, amount of simultaneous (or near in time) ride requests for similar routes, historic data, geographical data, time and zone expected demand for rides, etc. The use of machine learning techniques with said parameters is also embraced by the present invention.

According to further embodiments, further criteria are used to perform step b), i.e. for selecting and modifying the best possible route, and associated multi-passenger motor vehicle, for a new user ride request, such as required time windows for the ride, occupancy of the vehicles, traffic of vehicles, the above mentioned parameters, etc. The use of machine learning techniques with said parameters and those associated to said criteria is also embraced by the present invention.

The method of the first aspect of the present invention comprises, for an embodiment, performing the above mentioned preassigning of pickup and drop-off locations for the ride requested at step a) for several and different preassigned pickup and drop-off locations, wherein step b) comprises performing said checking process for all of said preassigned pickup and drop-off locations, and, in case, several positive results are obtained for the same already existing route, at b2a) and/or b2b), selecting, by means of an optimization process, one pickup location and one drop-off location, out of said several and different preassigned pickup and drop-off locations, to be included in the modified route.

For an embodiment, a heuristic algorithm is used to perform one or more of said checking process, optimization process, and generation of preassigned pickup and drop-off locations.

Preferably, step b), including sub-steps b1) and b2), including b2a) and b2b), is performed in real time or near real time upon the user ride request at a).

According to a further embodiment, the method of the first aspect of the invention further comprises displaying, on at least a screen of the user computing device and/or of the driver computer device, a map with the route assigned, including the pickup and drop-off locations.

The present invention relates, in a second aspect, to a computer program comprising code instructions that when run in one or more processors implement the method of any of the previous claims.

Specifically, said computer program comprises several computer program components with code instruction running on the user computer devices, for implementing step a), on the computing server, for implementing step b) (including b1), b2), b2a) and b2b)), and on the driver computing devices.

In a third aspect, the present invention relates to an automatic on-demand multi-passenger ride sharing system, comprising:
- user computing devices configured and arranged to communicate with a computing server, each of said user computing devices being adapted to implement step a) of the method of the first aspect of the invention;
- driver computing devices for the drivers of corresponding multi-passenger motor vehicles, configured and arranged to communicate with a computing server; and
- a computing server configured and arranged to communicate with each of said user computing devices and of said driver computing devices, and adapted to implement step b), including b1), b2), b2a) and b2b), of the method of the first aspect of the invention.

The computer server is adapted to send to each of the driver computer devices, the assigned routes, including an already existing route and the modified route assigned at b2a) or b2b).

### BRIEF DESCRIPTION OF THE FIGURES

In the following some preferred embodiments of the invention will be described with reference to the enclosed figures. They are provided only for illustration purposes without however limiting the scope of the invention.

Figures 1a, 1b and 1c schematically illustrates the main components of the system of the third aspect of the present invention, implementing different scenarios of the method of the first aspect of the invention, for an embodiment.

Figures 2a, 2b and 2c schematically show a route followed by a multi-passenger motor vehicle, and the constraints associated thereto to be modified to include a new user ride request according to the method of the first aspect of the present invention, for an embodiment.

### DESCRIPTION OF THE PREFERRED EMBODIMENTS

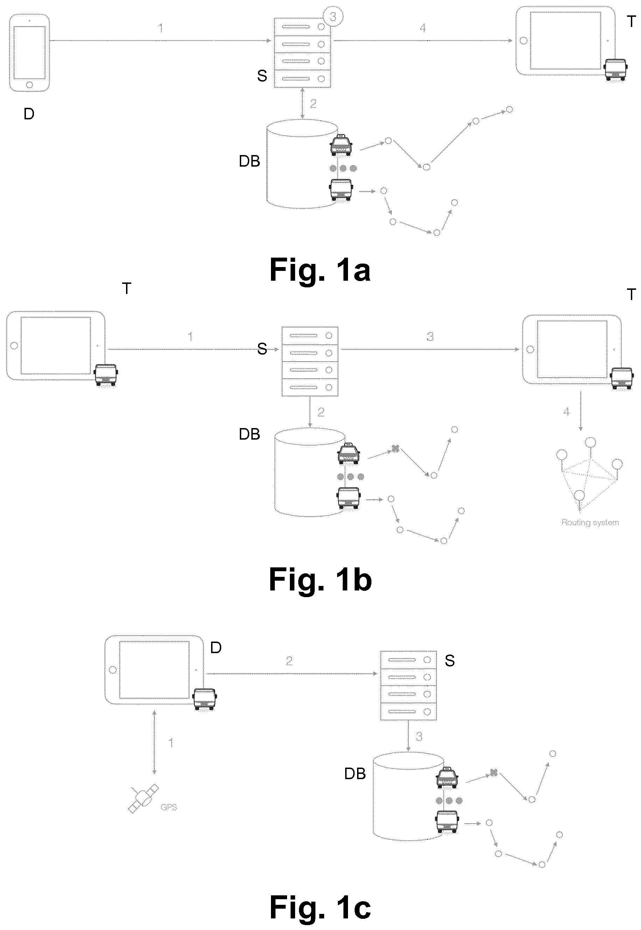

Figure 1a shows an initial scenario where a new ride is requested by a user according to the system and method of the present invention, and includes the following steps:
   1. A new user requests a ride through a computing device D, to a computing server S, according to step a) of the method of the first aspect of the present invention.
   2. The computing server S checks the current state of the vehicles and the current routes already assigned to them (passengers already on the vehicle or waiting to be picked up), in a data base DB including the data sets representative of several divergent geographical areas defined according to step b1) of the method of the first aspect of the invention.
   3. The computing server S decides which is the best vehicle to assign the new ride and how to modify its route to accommodate it, following step b2) (including b2a) or b2b)) of the method of the first aspect of the invention.
   4. The computing server S communicates the route update (obtained at b2a) or b2b)) to the driver computing device T.
Figure 1b shows a subsequent scenario to that of Figure 1a, corresponding also to the system and method of the present invention, and includes the following steps for the pickup or drop-off of a passenger, i.e. of the user requesting a ride in step a):
   1. The driver indicates to the computing server S, through its driver computing device T, that a user has been picked up or dropped off by the vehicle.
   2. The computing server S modifies, in the database DB, the current state of the vehicles and the routes already assigned to them to take the new pickup/drop-off into account (removes one event from the remaining queue).
   3. The computing server S confirms the pickup/drop-off to the driver computing device T.
   4. A driver app installed in the driver computing device T checks with a routing system where to go.

Finally, Figure 1c shows a further scenario where the driver sends its position, and includes the following steps:
1. The driver app of the driver computing device T gets its position from a GPS system.
2. The driver app sends its position to the computing server S through the driver computing device T.
3. The computing server S registers in the data base DB the new position of the vehicle associated to the driver computing device T or app.

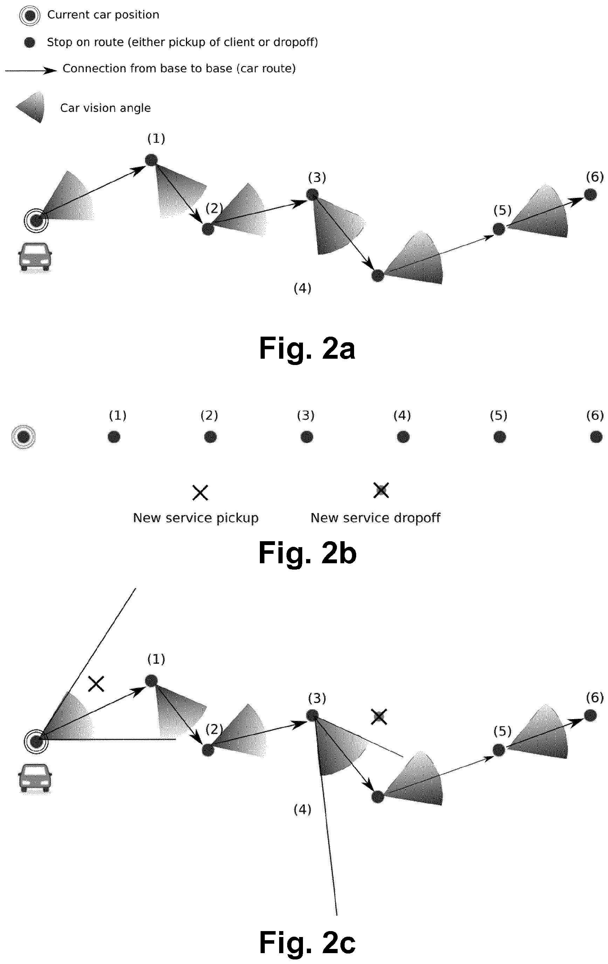

Referring now to Figures 2a, 2b and 2c, they graphically show the key steps of the method of the first aspect of the present invention, for an embodiment, and, for clarity sake, only for one multi-passenger motor vehicle.

Particularly, Figure 2a shows the already existing route assigned to a vehicle, including its current car position, and different stops along the route (at pickup or drop-off locations), also called "bases", which are identified by corresponding numerals (1) to (6) and interconnected via respective connectors. I.e., the vehicle travels through route 1-> 2-> 3-> 4-> 5-> 6.

From each "base", and also from current car position, a respective divergent geographical area departs (called in the Figure "car vision angle"), as defined in step b1) of the method of the first aspect of the present invention.

When a new petition for a ride is received at step a), i.e. a new user requests a ride from a point A to a point B of the city, the system/method of the present invention must decide where to locate the "pickup" and "drop-off" locations for said new user ride request (obviously, always pickup location before drop-off location). There are N (N + 1) / 2 possibilities, where N is the number of stops that the vehicle must do in the current route.

In Figure 2b all the pickups and drop-off locations are depicted in a line for better illustrating the scenario. For example, the pickup location can be placed between (2) and (3), as shown in the Figure, but this implies that the drop-off location can go immediately after the pickup or later (between (3) and (4), as shown in the Figure, or between (4) and (5), or between (5) and (6)).

The decision about where to locate the pickup and drop-off locations for the new ride, or service, is based, for an embodiment, on the time that this implies for old users (i.e. for those already on board the vehicle) and for the new user, in terms of waiting time (WT) and travel time (TT). That is, in any decision the invention tries to minimize TT and WT for all users.

However, according to the illustrated preferred embodiment, it is desired that the vehicle not to turn back and that is why some possible options are eliminated by means of the "constraints" associated to the divergent geographical areas, and particularly by appropriately choosing the angles thereof.

For example, for the embodiment illustrated in Figure 2c, the new pickup would be the first action the car would do. One can see in that Figure, that the new pickup location falls into the divergent geographical area departing from the current car position location, therefore according to said new pickup location the associated modification to the route would be possible. However, when looking, in Figure 2c, at the new drop-off location, one can see that it does not enter into any of the depicted divergent geographical areas, in this case divergent geographical area departing from (3), i.e. between "bases" (3) and (4), therefore this option would not be considered as possible (although users' times WT and TT were very favourable), and the depicted route would be discarded to be selected, modified and assigned to the new user ride request.

In other words, for the embodiment illustrated in Figure 2c, the checking process performed in step b2a) of the method of the first aspect of the invention gives a negative result, and then step b2b) should be subsequently performed on further already existing routes, for other multi-passenger motor vehicles, until a positive result is found.

The embodiment depicted in Figures 2a, 2b and 2c is a simplified one, and, as stated above, only related to one multi-passenger motor vehicle. More preferred embodiments include, as already described in a previous section, checking different preassigned pickup and drop-off locations for each route, obtaining several candidate routes, and the application of optimization processes to select the best route to be modified and assigned to the new user.

A person skilled in the art could introduce changes and modifications in the embodiments described without departing from the scope of the invention as it is defined in the attached claims.

## Claims

1. An automatic on-demand multi-passenger ride sharing computer-implemented method, comprising:
a) a user requesting to a computing server (S), by means of a corresponding user computing device (D) in communication therewith, a ride in a multi-passenger motor vehicle from an origin location up to a destiny location; and
b) selecting and modifying, by means of data processing at said computing server (S), an already existing multi-passenger motor vehicle route, out of several already existing routes of several multi-passenger motor vehicles for other users, upon said user ride request, assigning the modified route to the associated multi-passenger motor vehicle, and sending the assigned modified route to a driver computer device (T) accessed by the driver of the associated multi-passenger route;
**characterised in that** said step b) comprises:
b1) defining, at the computing server (S) and for at least some of different pickup and drop-off locations included in at least one of said several already existing routes, data sets representative of several divergent geographical areas, each departing from a respective of said different pickup and drop-off locations and diverging therefrom with a predetermined angle; and
b2) checking, by means of data processing at the computing server (S), if pickup and drop-off locations preassigned for the ride requested at step a) are within two respective of said several divergent geographical areas of at least one already existing route, and:
b2a) if so, selecting the associated already existing route as a candidate route to be modified to include the pickup and drop-off locations of the requested ride, and to be assigned to the associated multi-passenger motor vehicle; or
b2b) if said checking provides a negative result, performing the same checking step but on one or more other of said already existing routes, at least until a positive result is found for one of said already existing routes,
and then selecting the already existing route providing said positive result as a candidate route to be modified to include the pickup and drop-off locations of the requested ride, and to be assigned to the associated multi-passenger motor vehicle.

2. A method according to claim 1, comprising, at step b2a) or b2b), modifying said candidate route to include the pickup and drop-off locations of the requested ride, and assigning the so modified route to the associated multi-passenger motor vehicle.

3. A method according to claim 1, wherein said step b2a) and/or said step b2b) further comprises performing the same checking step but on one or more other of said already existing routes, and then selecting the already existing route or routes providing a positive result for said checking step as a candidate route or candidate routes to be modified to include the pickup and drop-off locations of the requested ride, and to be assigned to the associated multi-passenger motor vehicle.

4. A method according to claim 3, comprising processing, at the computing server (S), data representative of the candidates routes obtained at b2a) and/or b2b) to select one of them, based on an optimization process, modifying said selected candidate route to include the pickup and drop-off locations of the requested ride, and assigning the so modified route to the associated multi-passenger motor vehicle.

5. A method according to any of the previous claims, comprising, at step b1), selecting each of said predetermined angles under the constraint that the divergent geographical area associated thereto only covers locations which are in paths not going in opposite directions to that departing from the corresponding pickup or drop-off location from which the divergent geographical area diverges and going up to the next drop-off or pickup location.

6. A method according to any of the previous claims, wherein each of said predetermined angles is below 90°.

7. A method according to claim 6, wherein each of said predetermined angles is below 70°.

8. A method according to any of the previous claims, wherein each of said predetermined angles is above 40°, and preferably above 50°.

9. A method according to any of the previous claims, wherein each of said several divergent geographical areas is symmetrically distributed with respect to a symmetry axis defined by the path departing from the corresponding pickup or drop-off location from which the divergent geographical area diverges and going up to the next drop-off or pickup location.

10. A method according to any of the previous claims, comprising performing said preassigning of pickup and drop-off locations for the ride requested at step a) for several and different preassigned pickup and drop-off locations, wherein step b) comprises performing said checking process for all of said preassigned pickup and drop-off locations, and, in case, several positive results are obtained for the same already existing route, at b2a) and/or b2b), selecting, by means of an optimization process, one pickup location and one drop-off location, out of said several and different preassigned pickup and drop-off locations, to be included in the modified route.

11. A method according to any of the previous claims, wherein step b), including sub-steps b1) and b2), including b2a) and b2b), is performed in real time or near real time upon the user ride request at a).

12. A method according to any of the previous claims, further comprising displaying, on at least a screen of the user computing device (D) and/or of the driver computer device (T), a map with the route assigned, including the pickup and drop-off locations.

13. A computer program, comprising code instructions that when run in one or more processors implement the method of any of the previous claims.

14. An automatic on-demand multi-passenger ride sharing system, comprising:
- user computing devices (D) configured and arranged to communicate with a computing server (S), each of said user computing devices (D) being adapted to implement step a) of the method according to any of claims 1 to 12;
- driver computing devices (T) for the drivers of corresponding multi-passenger motor vehicles, configured and arranged to communicate with a computing server (S); and
- a computing server (S) configured and arranged to communicate with each of said user computing devices (D) and of said driver computing devices (T), and adapted to implement step b), including b1), b2), b2a) and b2b), of the method according to any of claims 1 to 12.
